Europäisches Patentamt

European Patent Office

Office européen des brevets

(11) Veröffentlichungsnummer: **0 218 903**
**A2**

(12) **EUROPÄISCHE PATENTANMELDUNG**

(21) Anmeldenummer: 86112333.9

(22) Anmeldetag: 05.09.86

(51) Int. Cl.⁴: **B60K 17/04**

(30) Priorität: 15.10.85 DE 3536647

(43) Veröffentlichungstag der Anmeldung:
22.04.87 Patentblatt 87/17

(84) Benannte Vertragsstaaten:
AT BE CH DE FR GB IT LI NL

(71) Anmelder: **M A N Nutzfahrzeuge GmbH**
**Dachauer Strasse 667 Postfach 50 06 20**
**D-8000 München 50(DE)**

(72) Erfinder: **Drewitz, Hans Jürgen**
**Agnesstrasse 59**
**D-8000 München 40(DE)**
Erfinder: **Thudt, Hubert**
**Adenauerstrasse 32**
**D-8039 Puchheim/Bahnhof(DE)**

(54) **Drehmomentübertragung in einem angetriebenen Kraftfahrzeugrad.**

(57) In einer Vorrichtung zum wahlweisen Zu-und Abschalten des Drehmomentenflusses in einer mit einem Planetengetriebe versehenen Radnabe eines angetriebenen Kraftfahrzeuges ist das Hohlrad (2) des
Planetengetriebes (1) fest mit einem gegenüber dem
Achsschenkelzapfen (3) drehbar gelagerten Hohlradträger (4) verbunden und zwischen Hohlradträger
(4) und Achsschenkelzapfen (3) ist eine mit einem
flüssigen und gasförmigen Medium beaufschlagbare
Kupplung (5) angeordnet, wobei das Medium nur
durch stationäre Teile der Vorrichtung geführt ist.

EP 0 218 903 A2

## Drehmomentübertragung in einem angetriebenen Kraftfahrzeugrad

Die Erfindung bezieht sich auf eine Vorrichtung zum wahlweisen Zu-und Abschalten des Drehmomentenflusses in einer mit einem Planetengetriebe versehenen Radnabe eines angetriebenen Kraftfahrzeugrades.

Radseitige Nabenschaltungen durch Klauenkupplungen, die wahlweise die Antriebssteckachse mit der Radnabe verbinden oder lösen, sind allgemein bekannt. Jedoch stößt ihre Anwendung bei Achsen mit in der Nabe integriertem Planetengetriebe auf erhebliche Schwierigkeiten hinsichtlich einer wahlweisen Verbindung des freilaufenden Sonnenrades mit der Antriebssteckachse. Die Schwierigkeiten erstrecken sich insbesondere auf die Verbreiterung der Achse über das Normmaß von 2500 mm hinaus durch das notwendige achsenaußenseitige Anbringen der gekapselten Steuereinrichtung, die im wesentlichen aus einer Schaltmuffe mit Kupplungsklauen, Rückholfedern und einem Pneumatikraum mit den entsprechenden Abdichtungen besteht. Eine weitere Schwierigkeit ergibt sich aus der Einbringung der benötigten Druckluftsteuerung in das an sich vollständig gekapselte, im eigenen Ölbad laufende Planetengetriebe. Hier gibt es kaum eine Durchtrittsmöglichkeit für eine Druckluftleitung durch die Ebene der Umlaufverzahnung. Das Einbringen der Druckluftleitung - scheitert, insbesondere bei Vorderachsantrieben, an den umlaufenden Teilen des homokinetischen Gelenkwellenlenteils in der Drehzapfenebene.

Der Erfindung liegt die Aufgabe zugrunde, den globalen mechanischen Wirkungsgrad eines Mehrachs-Fahrzeugantriebsstranges durch bedarfsorientierte Stillegung der Antriebsverbindungen zu den zugeordneten Rädern der jeweilig abund zuzuschaltenden Antriebsachse zu reduzieren.

Dies wird erfindungsgemäß dadurch erreicht, daß das Hohlrad des Planetengetriebes fest mit einem gegenüber dem Achsschenkelzapfen drehbar gelagerten Hohlradträger verbunden ist und zwischen Hohlradträger und Achsschenkelzapfen eine mit einem flüssigen oder gasförmigen Medium beaufschlagbare Kupplung angeordnet ist, wobei das Medium nur durch stationäre Teile der Vorrichtung geführt ist. Diese Anordnung ergibt vorteilhafterweise eine Reduzierung der Leerlaufeinsatzzeiten des stillgelegten Antriebsstranges, was wiederum auf eine Erhöhung der Gesamtlebensdauer zielt. Weiterhin ergibt sich eine Verbesserung des globalen Wirkungsgrades durch Entfall der anteiligen Lagerreibungs-und Zahnradeingriffsverluste sowie der Planschverluste durch Verringerung der Relativdrehzahl von Hohlund Bremstrommel. Als weiterer Nutzen ergibt sich eine Reduzierung des Kraftstoffverbrauches durch den Entfall der notwendigen Leistung zur Rotationsbeschleunigung des mitdrehenden Antriebsstranges bei instationärer Fahrweise. Nach einem Merkmal der Erfindung weist die Kupplung ein auf dem Achsschenkelzapfen fest angeordnetes Gehäuse mit einem darin axial verschiebbaren, gegenüber dem Gehäuse drehfesten Kupplungskolben auf, wobei in gekuppeltem Zustand die Klauen des Kupplungskolbens mit den Klauen des Hohlradträgers unter Federdruck in Eingriff stehen. Solcherart ergibt sich eine einfache Konstruktion, die räumlich kleingehalten werden kann und keine Neudimensionierung des Achsschenkelzapfens und der Radnabe bedarf. Nach einer besonderen ren Ausgestaltung der Erfindung ist zwischen Hohlradträger und Gehäuse mit Kupplungskolben ein Dichtteller zur Erzeugung eines Verdrängungsraumes angeordnet, wobei mehrere Dichtungen, diesen Raum hermetisch verschließend, vorgesehen sind. Der Dichtteller ermöglicht den Aufbau eines Verdrängungsraumes und verhindert mit den in oder an ihm angeordneten Dichtungen, daß im Planetengetrieberaum befindliches Öl in ihm eindringt. In vorteilhafter Weise sind zur Zuführung des Druckmediums ein Kanal im Achsschenkelzapfen und ein mit ihm verbundener Kanal im Gehäuse vorgesehen, wobei der letztere im Verdrängungsraum mündet. Die das Medium, z. B. Druckluft, führenden Teile sind stationär und somit keinem Verschleiß durch Drehung äusgesetzt, so daß Leckverluste und Eindringen von Planschöl nicht zu befürchten ist. Nach einer vorteilhaften Ausgestaltung der Erfindung ist am Innenring des äußeren Rollenkegellagers ein Dichtungshalter, eine lagerzugewandte Dichtung aufnehmend, angeordnet, sowie eine Schraubenfeder, die zwischen dem Dichtungshalter und dem Innenring des inneren Kegelrollenlagers verspannt ist. Solcherart wird eine Axialverschiebung des Innenringes des äußeren Kegelrollenlagers z. B. zur Radlagerspieleinstellung ermöglicht.

Weitere Merkmale und Vorteile der Erfindung sind den Ansprüchen, der Beschreibung und den Zeichnungen zu entnehmen.

Die Erfindung ist in einem Ausführungsbeispiel dargestellt.

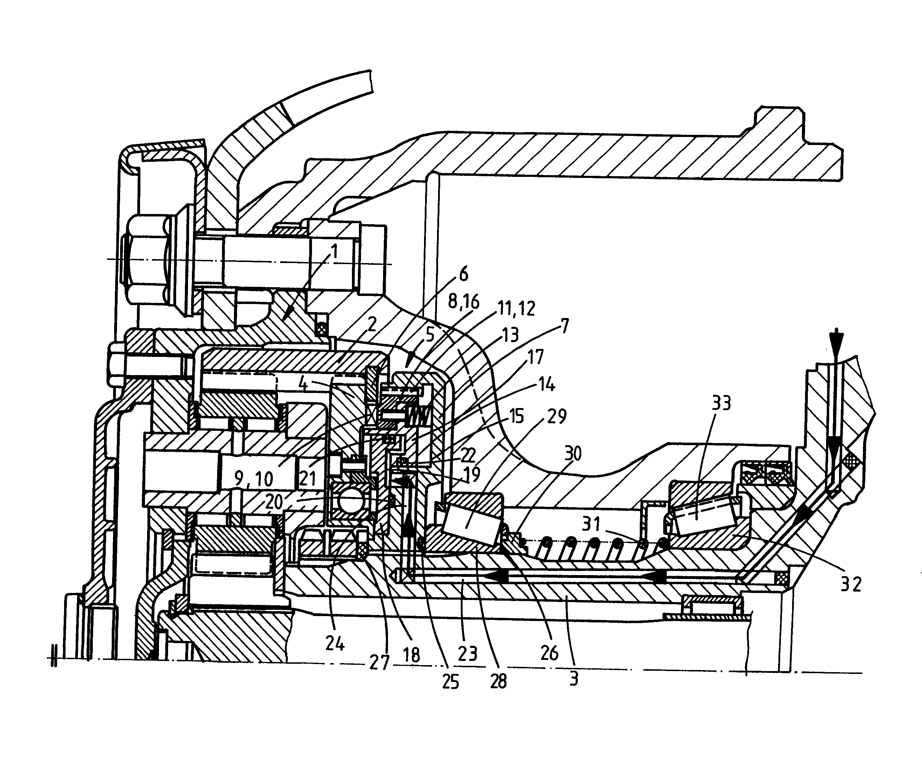

Die einzige Figur zeigt einen Teilschnitt durch die mit einem Planetengetriebe versehene Radnabe. Das Hohlrad 2 des Planetengetriebes 1 ist an dem kugelgelagerten Hohlradträger 4 über eine Zahnkupplung und einen Sicherungsring 6 befestigt. Der Hohlradträger 4 stützt sich über ein Wälzlager und einem Ansatz des Gehäuses 7 auf dem Achsschenkelzapfen 3 ab. Dem Hohlradträger 4 zugeordnet ist die Kupplung 5, die im wesentlichen aus dem Gehäuse 7, dem Kupplungskolben 8, dem Dichtteller 18, den Druckfedern 13 und den Dichtungen 20, 21 und 22 besteht. Über eine Zahnkupplung ist das Gehäuse 7 mit dem Achsschenkelzapfen verbunden. Innerhalb des Gehäuses ist der Kupplungskolben 8 gelagert. Er weist Klauen 9 auf, die mit Klauen 10 des Hohlradträgers 4 unter dem Andruck der Federn 13 in Wirkverbindung stehen. Der Kolben ist umfangsseitig über eine Zahnwellenverbindung axial verschiebbar mit dem Gehäuse verbunden und lagert mit seiner inneren Zylinderfläche, die mit Dichtring 22 abgedichtet ist, auf der entsprechenden zylindrischen Dichtfläche des Gehäuses. Der Kupplungskolben setzt sich aus den Teilen 16 und 17 zusammen. Zwischen der Kolbenwand 14 und der Gehäusewand 15 sind die Druckfedern 13 angeordnet. Durch den Dichtteller 18, der auf dem Flansch des Gehäuses 7 zentriert und zwischen Lagerflansch und Gehäuse eingesetzt ist, wird über die entsprechenden Dichtungsflächen des Dichttellers mit Dichtung 21 und Kupplungskolben 8 einerseits, sowie der Dichtflächen zwischen Kupplungskolben und Standgehäuse andererseits, der Verdrängungsraum 19 zur pneumatischen Ansteuerung des Entkupplungsvorganges gebildet. Die Druckluftzuführung in den Verdrängungsraum 19 wird mittels eines Kanals 24 im Gehäuse 7, der mit einem Kanal 23 im Achsschenkelzapfen 3 verbunden ist, erzielt. Die Abdichtung der Druckluftzufuhr im Gehäuse 7, gegenüber dem Ölbad des Planetengetriebes, wird am Gehäuse und am Kegelrollenlagers 29 durch die Dichtungen 26 und 25 gewährleistet. Gegenüber dem Achsschenkelzapfen wird die Abdichtung durch die Gewindedichtung 27 erreicht. Um eine Axialverschiebung des Innenringes 28 des äußeren Kegelrollenlagers 29 (Radlagerspieleinstellung) zu ermöglichen, wird der Dichtungshalter 30 mit einer Schraubenfeder 31, die zwischen den beiden Innenringen 28 und 32 der Kegelrollenlager 29 und 33 verspannt ist, gegen den Innenring 28 des äußeren Kegelrollenlagers 29 gedrückt. Im verriegelten Zustand (Drehmomentfluß zum Rad eingeschaltet) sind die Mitnehmerklauen 10 des Hohlradträgers 4 mit den Mitnehmerklauen 9 des Kupplungskolben 8 verbunden. Hierbei wird durch die Druckfedern 13 mit einer definierten Kraft der Kupplungskolben 8 gegen den Hohlradträger 4 gedrückt. Das auf das Hohlrad 2 wirkende Rückstellmoment kann sich somit auf dem Achsschenkelzapfen 3 abstützen.

Im entriegelten Zustand (Drehmoment zum Rad abgeschaltet) sind die Mitnehmerklauen des Hohlradträgers 4 nicht mehr mit den Mitnehmerklauen 9 des Kupplungskolbens 8 verbunden. Diese Entkupplung wird durch die Druckluftbeaufschlagung des Verdrängerraumes 19 bewirkt.

Durch den Luftdruck wird der Kupplungskolben 8 unter Überwindung der Federdruckkräfte in axialer Richtung ausgerückt und so die Rückstellmomentabstützung unterbrochen. Der Antriebsstrang bis zum Sonnenrad kann nun anderweitig festgestellt werden.

Bezugszeichenliste

1 Planetengetriebe
2 Hohlrad von 1
3 Achsschenkelzapfen
4 Hohlradträger
5 Kupplung
6 Sicherungsring
7 Gehäuse
8 Kupplungskolben
9 Klauen von 8
10 Klauen von 4
11 Verzahnung
12 Verzahnung
13 Druckfeder
14 Kolbenwand
15 Gehäusewand
16 Teil von 8
17 Teil von 8
18 Dichtteller
19 Verdränungsraum
20 Dichtung
21 Dichtung
22 Dichtung
23 Kanal in 3
24 Kanal in 7
25 Dichtungen
26 Dichtungen
27 Dichtungen
28 Innenring von 29
29 äußeres Kegelrollenlager
30 Dichtungshalter
31 Schraubenfeder
32 Innenring von 33
33 inneres Kegelrollenlager

Ansprüche

1. Vorrichtung zum wahlweisen Zu-und Abschalten des Drehmomentenflusses in einer, mit einem Planetengetriebe versehenen Radnabe eines angetriebenen Kraftfahrzeugrades, dadurch gekennzeichnet, daß das Hohlrad (2) des Planetengetriebes (1) fest mit einem gegenüber dem Achsschenkelzapfen (3) drehbar gelagerten Hohlradträger (4) verbunden ist und zwischen dem Hohlradträger (4) und Achsschenkelzapfen (3) eine mit einem flüssigen oder gasförmigen Medium beaufschlagbare Kupplung (5) angeordnet ist, wobei das Medium, z. B. Druckluft, nur durch stationäre Teile der Vorrichtung geführt ist.

2. Vorrichtung nach Anspruch 1, dadurch gekennzeichnet, daß die Kupplung (5) ein auf dem Achsschenkelzapfen (3) fest angeordnetes Gehäuse (7) mit einem darin axial verschiebbaren, gegenüber dem Gehäuse drehfesten Kupplungskolben (8) aufweist, wobei im gekuppelten Zustand Klauen (9) des Kupplungskolbens (8) mit Klauen - (10) des Hohlradträgers (4) unter Federdruck in Eingriff stehen.

3. Vorrichtung nach Anspruch 1 oder 2, dadurch gekennzeichnet, daß das Gehäuse (7) und der Kupplungskolben (8) über eine Verzahnung - (11, 12) verbunden und Druckfedern (13) zwischen Kolbenwand (14) und Gehäusewand (15) angeordnet sind.

4. Vorrichtung nach den Ansprüchen 1 bis 3, dadurch gekennzeichnet, daß der Kupplungskolben (8) 2-teilig (16, 17) ausgebildet ist.

5. Vorrichtung nach einem oder mehreren der Ansprüche 1 bis 4, dadurch gekennzeichnet, daß zwischen dem Hohlradträger (4) und dem Gehäuse (7) mit Kupplungskolben (8) ein Dichtteller (18) zur Erzeugung eines Verdrängungsraumes (19) angeordnet ist, wobei Dichtungen (20, 21, 22), diesen Raum (19) hermetisch verschließend, vorgesehen sind.

6. Vorrichtung nach einem oder mehreren der Ansprüche 1 bis 5, dadurch gekennzeichnet, daß zur Zuführung des Druckmediums ein Kanal (23) im Achsschenkelzapfen (3) und ein mit ihm verbundener Kanal (24) im Gehäuse (7) vorgesehen sind, wobei der Kanal (7) im Verdrängungsraum (19) mündet.

7. Vorrichtung nach einem oder mehreren der Ansprüche 1 bis 6, dadurch gekennzeichnet, daß weitere Dichtungen (25, 26, 27) zur Abdichtung des Überganges von Kanal (23) in Kanal (24) vorgesehen sind.

8. Vorrichtung nach einem oder mehreren der Ansprüche 1 bis 7, dadurch gekennzeichnet, daß die Dichtungen (20, 21, 22, 25, 26) als Rundschnurringe und die Dichtung (27) als Gewindedichtung ausgebildet sind.

9. Vorrichtung nach einem oder mehreren der Ansprüche 1 bis 8, dadurch gekennzeichnet, daß am Innenring (28) des äußeren Kegelrollenlagers - (29) ein Dichtungshalter (30), die Dichtung (26) aufnehmend, angeordent ist, sowie eine Schraubenfeder (31), die zwischen dem Dichtungshalter (30) und dem Innenring (32) des inneren Kegelrollenlagers (33) verspannt ist.

0 218 903